# EUROPÄISCHE PATENTANMELDUNG

(11) **EP 0 849 402 A1**
(43) Veröffentlichungstag der Anmeldung: **24.06.1998**
(21) Anmeldenummer: 97116884.4
(22) Anmeldetag: 29.09.1997
(51) Int. Cl.: E02D 5/54, E02D 3/12, F16L 55/05

(54) **System zur Injektion von Feststoff-Suspensionen, insbesondere Suspensionen mit ultrafeinen Zementpartikeln**

(30) Priorität: 18.12.1996 DE 19652609
(71) Anmelder: Klaus Obermann GmbH, 64395 Brensbach (DE)
(72) Erfinder: Obermann, Klaus, 64739 Höchst (DE)
(74) Vertreter: Helber, Friedrich G., Dipl.-Ing.

(57) **Zusammenfassung**

System zur Injektion von Feststoff-Suspensionen, insbesondere Suspensionen mit ultrafeinen Zementpartikeln in Flüssigkeiten, z.B. Wasser mit wenigstens zwei Vorratsbehältern (10, 12) zur getrennten Bevorratung der flüssigen und festen Grundsubstanzen der zu injizierenden Suspensionen, einem über Transportmittel (14, 16) für die Grundsubstanzen mit den Vorratsbehältern gekoppelten Mischer (22) zur Mischung der Grundsubstanzen und Herstellung der Suspensionen, wenigstens einer Pumpe (24) und einem entsprechenden Leistungssystem (26, 28, 34, 38, 40) zur Förderung der Suspensionen von dem Mischer (24) in einen Suspensionsvorratsbehälter (30) und von diesem zu wenigstens einer Injektionsstelle (42).

Es ist eine Umschaltventilanordnung (36) vorgesehen, und das Leitungssystem (34, 38, 40) zwischen dem Suspensionsvorratsbehälter (30) und der wenigstens einen Injektionsstelle derart ausgebildet ist, daß mittels der Umschaltanordnung ein Injektionsbetrieb, welcher die Suspensionen von dem Suspensionsvorratsbehälter (30) zu der wenigstens einen Injektionsstelle (42) gefördert werden, und ein Umlaufbetrieb, in welchem die Suspensionen durch einen Teil (34, 38) des dem Suspensionsvorratsbehälter (30) nachgeordneten Leitungssystems in den Suspensionsvorratsbehälter zurück gefördert werden, einstellbar sind.

## Beschreibung

Die Erfindung betrifft ein System zur Injektion von Feststoff-Suspensionen, insbesondere Suspensionen mit ultrafeinen Zementpartikeln in einer Flüssigkeit, z. B. Wasser.

Solche Systeme sind bekannt. Sie dienen insbesondere im Tiefbaubereich zur Verfestigung oder Abdichtung von Böden, wobei die Suspensionen unter hohen Drücken mit bis zu 500 bar in den jeweiligen Boden injiziert werden.

Die bekannten Systeme haben sich zwar durchaus bewährt, sind jedoch vom Aufbau her relativ aufwendig und damit teuer. Der Erfindung liegt daher die Aufgabe zugrunde, ein in seinem Aufbau besonders einfaches und kostengünstiges System zur Injektion von Feststoff-Suspensionen, insbesondere Suspensionen mit ultrafeinen Zementpartikeln anzugeben, das aufgrund seines einfachen Aufbaus ein hohes Maß an Flexibilität aufweist und leicht an unterschiedlichen Einsatzorten eingesetzt werden kann.

Die Aufgabe wird gelöst von einem System der eingangs genannten Art mit wenigstens zwei Vorratsbehältern zur getrennten Bevorratung von flüssigen und festen Grundsubstanzen der zu injizierenden Suspensionen, einem über Transportmittel für die Grundsubstanzen mit den Vorratsbehältern gekoppelten Mischer zur Mischung der Grundsubstanzen und Herstellung der Suspensionen, wenigstens einer Pumpe und einem entsprechenden Leitungssystem zur Förderung der Suspensionen von dem Mischer in einen Suspensionsvorratsbehälter und von diesem Suspensionsvorratsbehälter zu wenigstens einer Injektionsstelle, wobei eine Umschaltventilanordnung vorgesehen und das Leitungssystem zwischen dem Suspensionsvorratsbehälter und der wenigstens eine Injektionsstelle derart angeordnet ist, daß mittels der Umschaltventilanordnung ein Injektionsbetrieb, in welchen die Suspensionen von dem Suspensionsvorratsbehälter zu der wenigstens einen Injektionsstelle gefördert werden, und ein Umlaufbetrieb, in welchen die Suspensionen durch einen Teil des dem Suspensionsvorratsbehälter nachgeordneten Leitungssystem in den Suspensionsvorratsbehälter zurückgefördert werden, einstellbar sind.

Als Pumpe können dabei vorteilhaft je nach Einsatzzweck und gewünschtem Injektionsdruck unterschiedliche Arten von Pumpen verwendet werden, wobei der Fachmann die jeweils geeignete Pumpe wählen kann. Dabei haben sich insbesondere dann, wenn sehr hohe Drücke erzeugt werden sollen, Kolbenpumpen bewährt. Allerdings kann es gerade bei dieser Art von Pumpen zu Druckschwankungen, sogenannten Druckpulsationen in dem Rohrleitungssystem kommen, wodurch das Rohrleitungssystem und eventuell in das Rohrleitungssystem eingebundene Funktionsbauteile, wie z.B. Filter, Vorratsbehälter, Ventile u.dgl. zu Schwingungen angeregt werden können, wobei solche Schwingungen nicht nur störende Geräusche hervorrufen, sondern auch einen erhöhten Verschleiß und ggf. sogar die Zerstörung des Rohrleitungssystems bzw. der Funktionsbauteile bedingen können.

Vorteilhaft können deshalb Mittel zur Dämpfung von in Rohrleitungssystemen bei der Förderung fluider Medien auftretender Druckpulsationen vorgesehen werden, wie sie z.B. aus der DE 37 35 081 A1 bekannt sind.

Die in der genannten Druckschrift beschriebenen Mittel zur Dämpfung von Druckpulsationen haben sich in der Praxis zwar bewährt, sind jedoch von ihrem Aufbau her relativ aufwendig, da die Druckpulsationen von einer in einem Rohrteil angeordneten Membran auf ein zwischen der Membran und dem Rohrteil befindliches Übertragungsmedium übertragen, aus dem Rohrteil herausgeführt und mittels des Übertragungsmediums an einen in der Regel gasgefüllten Druckspeicher weitergeleitet werden. Zudem unterliegt die Membran einem starken Verschleiß, da sie bauartbedingt nahezu ungedämpft relativ große Verformungen ausführen kann.

Erfindungsgemäß wird daher vorgeschlagen, die Mittel zur Dämpfung von in Rohrleitungssystemen auftretenden Druckpulsationen derart auszubilden, daß die Mittel in einem mit Anschlußmitteln versehenen Gehäuse vorgesehen sind, welches über die Anschlußmittel mit dem vom jeweiligen Medium durchströmten Rohrleitungssystem verbunden ist und einen mit dem Medium druckkommunizierenden Raum aufweist, der zumindest teilweise mit einem elastisch-kompressiblen Feststoff gefüllt ist. Der mit dem elastisch-kompressiblen Feststoff zumindest teilgefüllte Raum kann dann entsprechend dem obenerwähnten Gas-Druckspeicher der bekannten Dämpfungssysteme über eine - möglichst kurze - Zweigleitung an eine vom zu dämpfenden Medium durchströmte Leitungsstrecke des Rohrleitungssystems angeschlossen sein.

In vorteilhafter Weiterbildung wird im Gehäuse selbst eine im Betriebszustand von dem jeweiligen Medium durchströmte, Teil des Rohrleitungssystems bildende Leitungsstrecke gebildet, d.h. das Dämpfungssystem wird nicht über eine Zweigleitung am medien-durchströmten Rohrleitungssystem angeschlossen, sondern in das Rohrleitungssystem integriert.

Eine solche Ausgestaltung der Mittel zur Dämpfung der Druckpulsationen bietet gegenüber den bekannten Mitteln eine Reihe von Vorteilen. So wird es durch die Integration der Mittel in ein einziges Gehäuse möglich, einen kompakten Druckpulsations-Dämpfer zu schaffen, der leicht in ein Rohrleitungssystem eingebunden und ebenso leicht ausgetauscht werden kann. Auf außerhalb des Gehäuses vorgesehene Druckspeicher oder Übertragungsmedien zur Übertragung der Druckpulsationen aus dem Gehäuse heraus kann verzichtet werden.

Bei einer bevorzugten Ausführungsform dieser Mittel zur Dämpfung der Druckpulsationen ist der Raum zwischen der Gehäuse-Innenwand und einer elastischen Membran, deren eine Seite wenigstens einen Teil der Leitungsstrecke begrenzt, ausgebildet. Dabei kann die Membran als elastischer Schlauch ausgebildet sein.

Der Raum kann wenigstens teilweise mit elastisch aushärtendem Kunststoffschaum ausgeschäumt, alternativ oder zusätzlich aber auch wenigstens zum Teil mit einem Granulat aus elastisch-kompressiblen Feststoffpartikeln, insbesondere Korkpartikeln, gefüllt sein. Ebenfalls alternativ oder zusätzlich ist es möglich, den Raum wenigstens zum Teil mit einem zunächst fließfähigen und dann elastisch aushärtenden Material, insbesondere einem Silikon-Kunststoff oder einem Silikon-Kautschuk gefüllt werden. Dabei hat sich insbesondere eine Kombination aus Korkpartikeln und Silikon-Kautschuk bewährt.

Die Füllung des Raumes kann austauschbar sein. Dies erlaubt es, die Mittel in einfacher Weise optimal an die jeweiligen Druckverhältnisse und die zu dämpfenden Druckpulsationen anzupassen.

In den Raum kann ein vorgeformter, elastisch-kompressibler Körper vorzugsweise austauschbar eingesetzt sein. Dabei kann die Membran integraler Bestandteil des elastisch-kompressiblen Körpers sein.

Vorteilhaft entspricht der Durchflußquerschnitt der Leitungsstrecke im wesentlichen dem Durchflußquerschnitt der an die Leitungsstrecke angrenzenden Teil des Rohrleitungssystems, so daß es beim Übertritt des fluiden Mediums in die Leitungsstrecke bzw. beim Austritt des Mediums aus der Leitungsstrecke nicht zu zusätzlichen Druckschwankungen oder Änderungen in der Geschwindigkeit der strömenden Suspension kommt.

Da die mit dem erfindungsgemäßen System zur Injektion von Feststoff-Suspensionen zu injizierenden Suspensionen in der Regel mehr oder weniger schnell aushärten, besteht das weitere Problem, daß die Suspensionen in dem Rohrleitungssystem nicht stehen dürfen, da sie sonst in dem Rohrleitungssystem aushärten und es verstopfen. Da jedoch nach der Herstellung der Suspension in dem Mischer nicht kontinuierlich injiziert wird, sondern z.B. nach der Injektion der Suspension in ein Bohrloch die in dem Bohrloch mündenden Teile des Rohrleitungssystems in ein anderes Bohrloch gesetzt werden sollen, sind bei den bekannten Systemen mehrere Absperrhähne vorgesehen, die zusammen wie ein Umschaltventil wirken und es ermöglichen, die Leitungsabschnitte des Rohrleitungssystems zu der Injektionsstelle zu versperren und andere Teile des Rohrleitungssystems freizuschalten, über welche die Suspension in den Suspensionsbehälter zurückgelenkt wird (Umlaufbetrieb). Bei dem bekannten System besteht jedoch das Problem, daß dabei stets gewisse, wenn auch nur kurze Abschnitte des Rohrleitungssystems derart totgelegt werden, daß die darin befindliche Suspension steht und aushärten kann. Daher wird ein Umschaltventil für ein fluides Medium vorgeschlagen, das eine innere Kammer aufweist, die mit einer Einlaßöffnung zur Einleitung des jeweiligen fluiden Mediums in die Kammer und zwei Auslaßöffnungen zur Ausleitung des Mediums aus der Kammer versehen ist, wobei in der Kammer ein von außen zwischen zwei Schließstellungen bewegbare Ventilkörper angeordnet ist, der in jeder der beiden Schließstellungen jeweils eine der Aulaßöffnungen verschließt und wobei die innere Kammer und der Ventilkörper derart ausgebildet sind, daß im bestimmungsgemäßen Betrieb des Umschaltventils in jeder der beiden Schließstellungen des Ventilkörpers der kammerseitige Umgebungsbereich der jeweils verschlossenen Auslaßöffnung von dem Medium umströmt wird. Dadurch wird sichergestellt, daß es in dem Rohrleitungssystem keinerlei Abschnitte gibt, in denen bei der Umschaltung von Injektions- auf Umlaufbetrieb oder umgekehrt Suspension stehen und aushärten kann.

Bevorzugt ist dabei der Ventilkörper mittels eine aus der Kammer abgedichtet herausgeführten Betätigungsschafts oder Stößels bewegbar. Die Druck- und Zugstange kann mittels eines Betätigungshebels bewegbar sein.

Die Erfindung wird im folgenden anhand verschiedener Ausführungsbeispile in Verbindung mit den Zeichnungen näher erläutert. Es zeigen:
- Fig. 1: eine schematische Skizze eines erfindungsgemäßen Systems zur Injektion von Feststoff-Suspensionen;
- Fig. 2: die erfindungsgemäß ausgestalteten Mittel zur Dämpfung von Druckpulsationen in Form eines Druckpulsations-Dämpfers in teilweise geschnittener Ansicht;
- Fig. 3a, b, c: Ausschnitte aus drei verschiedenen Druckpulsationsdämpfern in geschnittener Ansicht; und
- Fig. 4: ein bei dem System gemäß Fig. 1 einsetzbares Umschaltventil für fluide Medien.

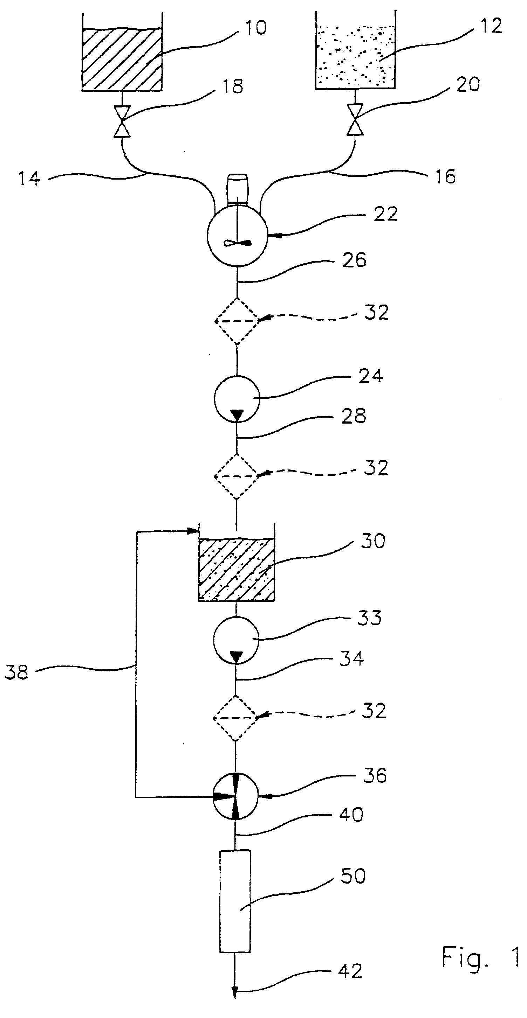

Die Fig. 1 zeigt schematisch die prinzipielle Anordnung eines Systems zur Injektion von Feststoff-Suspensionen mit zwei Vorratsbehältern 10 und 12 für die zur Herstellung der zu injizierenden Suspensionen benötigten flüssigen und festen Grundsubstanzen. Die Vorratsbehälter 10 und 12 sind über Leitungen 14 und 16, in denen jeweils ein Absperrventil 18 bzw. 20 angeordnet ist, mit einem Mischer 22 verbunden, in welchem aus den Grundsubstanzen eine zu injizierende Suspension gemischt wird. Diese Suspension wird dann aus dem Mischer 22 mittels einer Pumpe 24 über entsprechende Transportmittel, insbesondere Rohrleitungen 26 und 28 einem Suspensionsvorratsbehälter 30 zugeführt. In einer oder beiden Leitungen 26 und 28 können Filter 32 vorgesehen werden, welche verhindern, daß eventuell zusammengeklumpte Partikel der Suspension in den Suspensionsvorratsbehälter 30 gelangen. Alternativ oder zusätzlich ist es auch möglich, einen solchen Filter 32 in einer dem Suspensionsvorratsbehälter 30 nachgeordneten Leitung 34 vorzusehen.

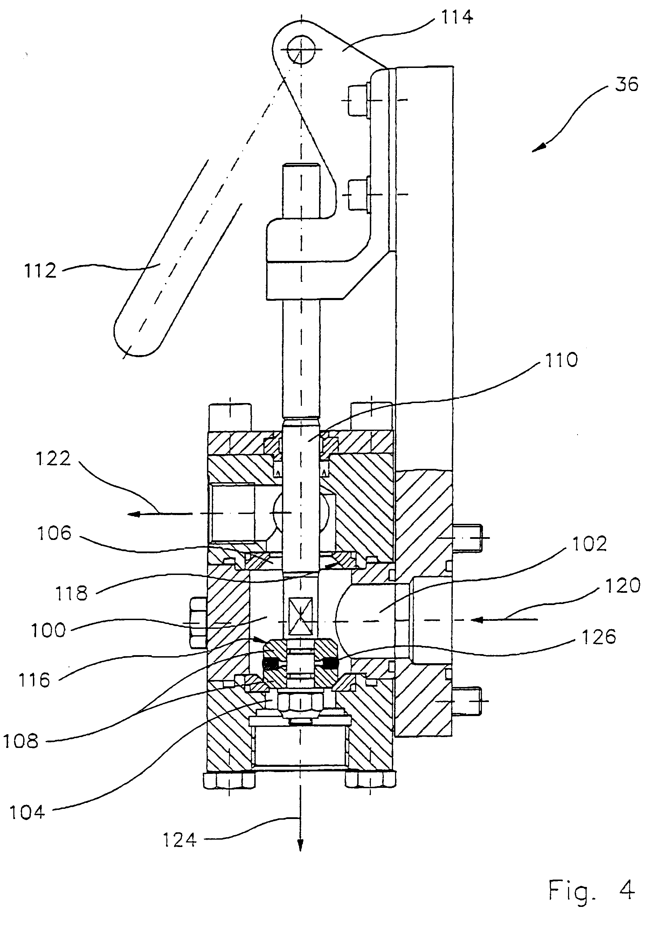

Zur Förderung der in dem Suspensionsvorratsbehälter 30 befindlichen Suspension zu einer Injektionsstelle ist eine Pumpe 33 vorgesehen, welche die Suspension in eine Leitung 34 pumpt, die in ein Umschaltventil 36 mündet. Von diesem Umschaltventil 36, welches im Folgenden in Verbindung mit der Fig. 4 noch näher erläutert wird, zweigen zwei Leitungen 38 und 40 ab, wobei die Leitung 38 in den Suspensionsvorratsbehälter 30 zurückgeführt ist, so daß sich bei entsprechender Stellung des Umschaltventils 36 ein sogenannter Umlaufbetrieb ergibt, in welchen die Suspension aus dem Vorratsbehälter 30 durch die Leitung 34 über das Umschaltventil 36 und die Leitung 38 zurück in den Suspensionsvorratsbehälter 30 gepumpt wird, wodurch vorteilhaft verhindert ist, daß die Suspension in dem Suspensionsvorratsbehälter oder dem Rohrleitungssystem steht und aushärten kann. Die zweite von dem Umschaltventil 36 abzweigende Leitung 40 mündet in der Injektionsstelle 42, wobei betont sei, daß in dieser schematischen Darstellung nur eine solche Injektionsstelle 42 gezeigt ist, während in der Praxis tatsächlich eine Vielzahl von Injektionsstellen in analoger Weise vorgesehen werden.

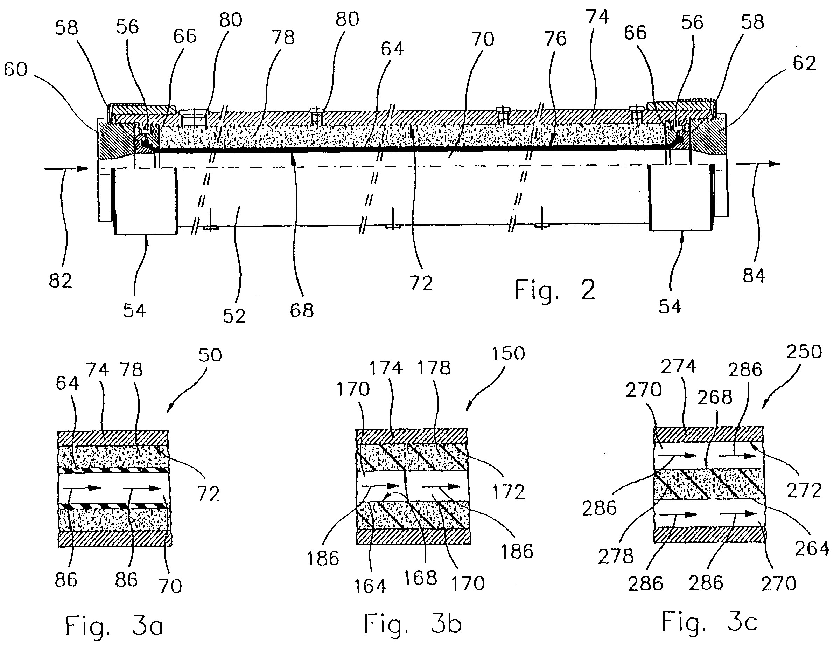

Um zu verhindern, daß die bei solchen Systemen oftmals auftretenden Druckpulsationen sich ungedämpft in den nachgeschalteten Anlageteilen bis zur Injektionsstelle fortpflanzen können, und wobei durch die dabei plötzlich auftretenden Drucksteigerungen Schwingungen angeregt werden können,die im ungünstigsten, d.h. im Resonanzfall auch zu Beschädigungen oder Zerstörungen führen können, sind in der Leitung 40 Mittel zur Dämpfung der Durckpulsationen in Form eines Druckpulsationsdämpfers 50 angeordnet. Ein solcher Druckpulsationsdämpfer 50 ist in der Fig. 2 in teilweise geschnittener Ansicht gezeigt.

Der Druckpulsationsdämpfer 50 besteht aus einem rohrförmigen Gehäuse 52, an dessen gegenüberliegenden Enden Anschlußmittel in Form jeweils einer Manschette 54, mehrerer Schrauben 56 sowie jeweils eines Flansches 58 vorgesehen sind. Diese Anschlußmittel 54, 56 und 58 ermöglichen die Einbindung des Druckpulsationsdämpfers 50 in ein Rohrleitungssystem in einfacher Weise derart, daß der Druckpulsationsdämpfer 50 zwischen zwei Rohrstücke 60 und 62 eines entsprechenden Rohrleitungssystems eingesetzt werden kann.

In dem Gehäuse 52 des Druckpulsationsdämpfers 50 ist eine schlauch- oder rohrförmige langgestreckte elastische Membran 64 vorgesehen und an den beiden Anschlußenden des Druckpulsationsdämpfers 50 zwischen den Flanschen 58 und 66 eingespannt. Eine Seite 68 der Membran bildet auf diese Weise eine Begrenzungswand einer in dem Druckpulsationsdämpfer 50 ausgebildeten Leitungsstrecke 70.

Zwischen der Innenseite 72 der Gehäuseummantelung 74 und der der Leitungsstrecke 70 abgewandten Seite 76 der Membran 64 ist ein Raum 78 gebildet, der mit einem elastisch-kompressiblen Feststoff gefüllt ist. Dabei hat sich insbesondere ein Gemisch aus einem Korkgranulat und zunächst fließfähigem und dann elastisch aushärtendem Silikon-Kautschuk bewährt. Prinzipiell sind aber auch andere Feststoff-Füllungen einsetzbar, worauf später im Zusammenhang mit den Fig. 3a bis 3c noch eingegangen wird.

Zur Ausfüllung des Raumes 78 mit dem Feststoff sind bei diesem Ausführungsbeispiel eines Druckpulsationsdämpfers in der Gehäuseummantelung 74 eine Anzahl von Ein- und Auslaßöffnungen 80 vorgesehen, von denen aus Gründen der Übesichtlichkeit nur einige mit Bezugszeichen versehen wurden. Bei der Herstellung eines solchen Druckpulsationsdämpfers 50 kann dann z.B. so vorgegangen werden, daß zunächst die Membran 64 in an sich bekannter Weise in den Druckpulsationsdämpfer 50 eingespannt wird, sodann ein die Grundform der gespannten Membran stützendes Stützrohr in die Leitungsstrecke 70 eingeführt wird, worauf dann über eine oder mehrere erdbodenzugewandte Öffnungen 80 der jeweilige Feststoff in den zwischen der Membran 64 und der Innenseite 72 der Gehäusewandung 74 gebildeten Raum 78 eingefüllt wird, bis dieser Feststoff aus den erdbodenabgewandten, oberen Öffnungen wieder austritt, so daß sichergestellt ist, daß der gesamte Raum 78 ausgefüllt ist. Der Raum 78 kann dabei mit unterschiedlichen Stoffen gefüllt werden, insbesondere auch zunächst fließfähigen und dann aushärtenden Materialien, wobei der Fachmann vorteilhaft jeweils ein Material wählen kann, das in seinem Kompressionsverhalten optimal an die jeweils zu dämpfenden Durckpulsationen angepaßt ist. Beispielhaft sei hier nur erwähnt, daß der Raum 78 mit einem Korkgranulat, mit einem Silikon-Kautschuk oder einer Mischung aus Korkgranulat und Silikon-Kautschuk, aber auch mit einem offen oder geschlossen porigem Kunststoffschaum ausgefüllt werden kann. Sobald jedenfall der Raum 78 ausgefüllt ist, werden die Ein- und Auslaßöffnungen 80 verschlossen und das Stützrohr - gegebenenfalls nach einer Aushärtephase - aus der Leitungsstrecke 70 entfernt.

Der Druckpulsationsdämpfer 50 arbeitet dann wie folgt: Nach Einbindung des Druckpulsationsdämpfers 50 in ein Rohrleitungssystem durch Anschließen des Dämpfers mittels der Anschlußmittel 54, 56 und 58 an zwei Rohre 60 und 62 des Rohrleitungssystems kann ein fluides Medium durch das Rohr 60 in Richtung des Pfeiles 82 in die Leitungsstrecke 70 des Druckpulsationsdämpfers 50 eintreten und diesen nach dem Durchqueren der Leitungsstrecke 70 in Richtung des Pfeiles 84 verlassen und seinen Weg in dem Leitungssystem zunächst in dem Rohr 62 fortsetzen. Treten nun in dem fließenden Medium Druckpulsationen auf, so pflanzen diese sich in der Regel in dem gesamten im Rohrleitungssystem befindlichen Medium fort und führen jeweils zu einer plötzlichen Erhöhung der Beanspruchungen in den leitungsabschnitten, die von den in der Regel relativ starren Wänden des Rohrleitungssystems nicht in hinreichendem Maße abgebaut werden können. Gelangen solche Druckpulsationen nun zu dem die Leitungsstrecke 70 durchströmenden Medium, so führt die plötzliche Druckerhöhung in dem Medium zu einem Zusammenpressen des elastisch-kompressiblen Feststoffes in dem Raum 78 über die Membran 64, so daß sich also das Durchsatzvolumen der Leitungsstrecke 70 kurzzeitig vergrößert und die Druckpulsationen so in dem dem Druckpulsationsdämpfer 50 nachgeordneten Teil 62 des Rohrleitungssystems auf eine zulässige Größe abgebaut werden. Läßt der kurzzeitig erhöhte Druck wieder nach, so entspannt sich das zusammengepreßte Material in dem Raum 78 wieder und die Leitungsstrecke 70 erhält ihr ursprüngliches Volumen zurück.

In den Figuren 3a bis 3c sind Schnittansichten verschiedener Ausführungsbeispiele von Druckpulsationsdämpfern 50, 150 und 250 einander gegenübergestellt. Der in Fig. 3a gezeigte Druckpulsationsdämpfer 50 entspricht in seinem prinzipiellen Aufbau dem in Fig. 2 gezeigten Druckpulsationsdämpfer und weist eine schlauch- oder rohrförmige elastische Membran 64, die im Gehäuse 52 des Druckpulsationsdämpfers 50 eingespannt gehalten ist, und deren eine Seite die Wandung einer Leitungsstrecke 70 definiert, während die andere Seite der Membran 64 zusammen mit der Innenseite 72 der Gehäusewandung 74 einen mit einem elastisch-kompressiblen Feststoff gefüllten Raum 78 definiert, wobei dann das jeweilige Medium, in dem zu dämpfende Druckpulsationen auftreten können, in der durch die Pfeile 86 angedeuteten Weise durch die Leitungsstrecke 70 strömt.

Der in der Fig. 3b gezeigte Druckpulsationsdämpfer 150 erinnert in seinem Aufbau an den in Fig. 3a gezeigten Druckpulsationsdämpfer 50 und weist eine in dem rohrartigen Gehäuse 174 des Druckpulsationsdämpfers 50 gebildete Leitungsstrecke 170 auf, die entlang der Pfeile 186 von dem jeweiligen Medium durchströmt werden kann. Jedoch ist bei diesem Ausführungsbeispiel keine gesonderte Membran vorgesehen, sondern die Membran 164 ist vielmehr integraler Bestandteil eines auf der Innenseite 172 des Gehäuses 174 des Druckpulsationsdämpfers 150 angeordneten elastisch-kompressiblen Körpers 178. Ein solcher Körper kann z.B. aus einem offen- oder geschlossenporigem Kunststoffschaum hergestellt sein, wobei die die leitungsstreckenseitige Innenwand 168 des Körpers dann z.B. durch Wärmeeinwirkung unter Bildung einer Membran 164 oder zumindest membranartigen Wandung gegen das Eindringen von Suspension in den Körper 178 abgedichtet ist.

In der Fig. 3c ist ein weiteres Ausführungsbeispiel eines Druckpulsationsdämpfers 250 gezeigt, bei dem wiederum ein elastisch-kompressibler Körper 278 vorgesehen ist, der sich jedoch - anders als im Ausführungsbeispiel der Fig. 3b - nicht unmittelbar auf der Innenseite 272 der Gehäusewand 274, sondern vielmehr in Durchflußrichtung gesehen etwa in der Mitte des rohrartigen Gehäuses des Druckpulsationsdämpfers 250 befindet und dort mittels an sich bekannter geeigneter und hier nicht weiter gezeigter Halterungsmittel gehaltert ist. Die Leitungsstrecke ist daher zwischen der Außenseite 268 der membranartigen Wand oder Fülle 264 des Körpers 278 und der Innenseite 272 der Gehäusewand 274 gebildet, wobei die Leitungsstrecke 270 dann in der durch die Pfeile 286 angedeuteten Weise von dem Medium, in dem die zu dämpfenden Druckpulsationen auftreten können, durchströmt werden kann.

Es sei an dieser Stelle nochmals betont, daß wesentliches Element der Druckpulsationsdämpfer ein mit einem elastisch-kompressiblen Feststoff gefüllter Raum ist, wobei es jedoch keine Rolle spielt, mit welchem Feststoff der Raum gefüllt ist und ob die den Raum begrenzende und die Übertragung von Druck auf den in dem Raum befindlichen Feststoff überhaupt erst ermöglichende Membran gesondert hergestellt oder integral an dem Feststoff angeformt ist.Wesntlich ist lediglich, daß der Widerstand des Feststoffs sowie der gegebenenfalls vorgesehenen Membran gegen elastische Volumenverringerung den auftretenden bzw. zu erwartenden Druckpulsationen angepasst bzw. anpassbar ist

Die Fig. 4 zeigt eine teilweise geschnittene Ansicht eines in seiner Gesamtheit mit 36 bezeichneten Umschaltventiles für ein fluides Medium, wobei das Umschaltventil 36 eine innere Kammer 100 aufweist, die mit einer Einlaßöffnung 102 zur Einleitung des jeweiligen fluiden Mediums in die Kammer 100 und zwei Auslaßöffnungen 104 und 106 zur Ausleitung des Mediums aus der Kammer 100 versehen ist. In der Kammer 100 ist ein von außen zwischen zwei Schließstellungen bewegbarer Ventilkörper 108 angeordnet, mittels welchem jeweils eine der Auslaßöffnungen 104 bzw. 106 verschließbar ist. In der gezeigten Position ist z.B. gerade die Öffnung 104 verschlossen. Der Ventilkörper 108 ist mittels eines aus der Kammer 100 abgedichteten und herausgeführten Betätigungsschafts oder Stößels 110 bewegbar, wobei der Schaft 110 selbst über einen hier nur angedeuteten Hebel 112, dessen Bewegung über eine an sich bekannte Umlenkung 114 auf den Betätigungsschaft 110 übertragbar ist, bewegbar ist.

Der Ventilkörper 108 weist in ihrer Kontur an die Kontur der den jeweils zu verschließenden Öffnung 104 bzw. 106 vorgeschaltete Ventil-Sitzflächen angepaßte Ventil-Sitzflächen auf; so ist z.B. die ringartig umlaufende Ventil-Sitzfläche 116 des Ventilkörpers 108 der ebenfalls ringartig umlaufende Kontur der Ventil-Sitzfläche 118 der Öffnung 106 entsprechend komplementär geformt. Die Besonderheit dieses Umschaltventils 36 liegt darin, daß ein Teil des in die Kammer 100 über die Öffnung 102 in Richtung des Pfeiles 120 einströmenden Mediums auch den Bereich der Kammer 100 umströmt, der die jeweils verschlossene Öffnung, im gezeigten Zustand des Umschaltventils 36 also die Öffnung 104, umgibt, bevor es die Kammer 100 über die andere, geöffnete Auslaßöffnung (hier also die Auslaßöffnung 106) in Richtung des Pfeiles 122 verläßt. Dadurch ist sichergestellt, daß es in dem Umschaltventil keine "toten" Bereiche gibt, in denen das Medium stehen und damit aushärten kann. Wird der Hebel 112 betätigt und der Ventilkörper 108 in eine die Auslaßöffnung 106 verschließende Position bewegt, verläßt das in die Kammer 100 einströmende Medium die Kammer durch die Auslaßöffnung 104 in Richtung des Pfeiles 124, wobei jedoch wiederum ein Teil des Medium zunächst die Kammer auch im Bereich der nun verschlossenen Auslaßöffnung 106 umströmt. Der Ventilkörper 108 ist im dargestellten Fall in zwei rechtwinklig zur Stößel-Längsachse aufeinanderfolgende Ventilkörperhälften unterteilt, zwischen denen ein Ring 126 aus elastomerem, d.h. elastisch zusammendrückbaren Material, eingesetzt ist. Dieser Ring 126 erlaubt eine Anlage der Ventil-Sitzflächen 116, 118 aneinander, wenn der Betätigungsschaft 110 vom Hebel 112 mit einem Überhub betätigt wird. Dieser Überhub führt dann zu einer elastischen Zusammendrückung des Rings 126, wodurch die erwähnte Vorspannung der Ventil-Sitzflächen aufeinander entsteht.

## Patentansprüche

1. System zur Injektion von Feststoff-Suspensionen, insbesondere Suspensionen mit ultrafeinen Zementpartikeln in Flüssigkeiten z.B. Wasser, mit
wenigstens zwei Vorratsbehältern (10, 12) zur getrennten Bevorratung der flüssigen und festen Grundsubstanzen der zu injizierenden Suspensionen,
einem über Transportmittel (14, 16) für die Grundsubstanzen mit den Vorratsbehältern (10, 12) gekoppelten Mischer (22) zur Mischung der Grundsubstanzen und Herstellung der Suspensionen,
wenigstens einer Pumpe (24) und einem entsprechenden Leitungssystem (26, 28, 34, 38, 40) zur Förderung der Suspensionen von dem Mischer (24) in einen Suspensionsvorratsbehälter (30) und von diesem Suspensionsvorratsbehälter (30) zu wenigstens einer Injektionsstelle (42),
wobei eine Umschaltventilanordnung (36) vorgesehen und das Leitungssystem (34, 38, 40) zwischen dem Suspensionsvorratsbehälter (30) und der wenigstens einen Injektionsstelle (42) derart ausgebildet ist, daß mittels der Umschaltventilanordnung (36)
ein Injektionsbetrieb, in welchem die Suspensionen von dem Suspensionsvorratsbehälter (30) zu der wenigstens einen Injektionsstelle (42) gefördert werden, und
ein Umlaufbetrieb, in welchem die Suspensionen durch einen Teil (34, 38) des dem Suspensionsvorratsbehälter (30) nachgeordneten Leitungssystems in den Suspensionsvorratsbehälter (30) zurück gefördert werden, einstellbar sind.

2. System insbesondere nach Anspruch 1 mit Mitteln zur Dämpfung von in Rohrleitungssystemen bei der Förderung fluider Medien auftretender Druckpulsationen,
dadurch gekennzeichnet,
daß die Mittel (50; 150; 250) zur Dämpfung der Druckpulsationen in einem mit Anschlußmitteln (54, 56, 58) versehenen Gehäuse (52) vorgesehen sind, welches über die Anschlußmittel mit dem vom jeweiligen Medium durchströmten Rohrleitungssystem verbunden ist und einen mit dem Medium druckkommunizierenden Raum (78; 178; 278) aufweist, der zumindest teilweise mit einem elastisch-kompressiblen Feststoff gefüllt ist.

3. System nach Anspruch 2, dadurch gekennzeichnet, daß im Gehäuse (52) ein im Betriebszustand vom jeweiligen Medium durchströmte, Teil des Rohrleitungssystems bildende Leitungsstrecke (70; 170; 270) gebildet ist.

4. System nach Anspruch 3, dadurch gekennzeichnet, daß der Raum (78; 178) zwischen der Gehäuseinnenwand (72; 172) und einer elastischen Membran (64; 164), deren eine Seite (68; 168) wenigstens eine Teil der Leitungsstrecke (70; 170) begrenzt, ausgebildet ist.

5. System nach einem der Ansprüche 3 oder 4, dadurch gekennzeichnet, daß die Membran (64) als elastischer Schlauch (64) ausgebildet ist.

6. System nach einem der Ansprüche 3 bis 5, dadurch gekennzeichnet, daß der Raum (178; 278) wenigstens teilweise mit elastisch aushärtendem Kunststoffschaum ausgeschäumt ist.

7. System nach einem der Ansprüche 3 bis 6, dadurch gekennzeichnet, daß der Raum (78) wenigstens zum Teil mit einem Granulat aus elastisch-kompressiblen Feststoffpartikeln, insbesondere Korkpartikeln gefüllt ist.

8. System nach einem der Ansprüche 3 bis 7, dadurch gekennzeichnet, daß der Raum (78) wenigstens zum Teil mit einem zunächst fließfähigen und dann elastisch aushärtenden Material, insbesondere einem Silikon-Kunststoff oder Silikon-Kautschuk gefüllt ist.

9. System nach einem der Ansprüche 3 bis 8, dadurch gekennzeichnet, daß die Füllung des Raumes (78; 178; 278) austauschbar ist.

10. System nach einem der Ansprüche 3 bis 9, dadurch gekennzeichnet, daß in den Raum (178; 278) ein vorgeformter, elastisch-kompressibler Körper (178; 278) vorzugsweise austauschbar eingesetzt ist.

11. System nach Anspruch 4 und Anspruch 10, dadurch gekennzeichnet, daß die Membran (164; 264) integraler Bestandteil des elastisch-kompressiblen Körpers (178; 278) ist.

12. System nach einem der Ansprüche 2 bis 10, dadurch gekennzeichnet, daß der Durchflußquerschnitt der Leitungsstrecke (70; 170; 270) im wesentlichen dem Durchflußquerschnitt der an die Leitungsstrecke angrenzenden Teile (60; 62) des Rohrleitungssystems entspricht.

13. System insbesondere nach Anspruch 1 mit einem Umschaltventil (36) für ein fluides Medium,
wobei das Umschaltventil (36) eine innere Kammer (100) aufweist, die mit einer Einlaßöffnung (102) zur Einleitung des jeweiligen fluiden Mediums in die Kammer und zwei Auslaßöffnungen (104, 106) zur Ausleitung des Mediums aus der Kammer (100) versehen ist,
wobei in der Kammer (100) ein von außen zwischen zwei Schließstellungen bewegbarer Ventilkörper (108) angeordnet ist, der in jeder der beiden Schließstellungen jeweils eine der Auslaßöffnungen (104, 106) verschließt, und
wobei die innere Kammer (100) und der Ventilkörper (108) derart ausgebildet sind, daß im bestimmungsgemäßen Betrieb des Umschaltventils (36) in jeder der beiden Schließstellungen des Ventilkörpers (108) der kammerseitige Umgebungsbereich der jeweils verschlossenen Auslaßöffnung (104, 106) von dem Medium umströmt wird.

14. System nach Anspruch 13, dadurch gekennzeichnet, daß der Ventilkörper (108) mittels einer aus der Kammer (100) abgedichtet herausgeführten Betätigungsschafts oder Stößels (110) bewegbar ist.

15. System nach Anspruche 14, dadurch gekennzeichnet, daß der Betätigungsschaft oder Stößel (110) mittels eines Betätigungshebels (112) bewegbar ist.
